# EUROPEAN PATENT APPLICATION

(11) **EP 1 318 007 A2**
(43) Date of publication of application: **11.06.2003**
(21) Application number: 02027417.1
(22) Date of filing: 09.12.2002
(51) Int. Cl.: B31B 19/90

(54) **Method for manufacturing a resealable bag**

(30) Priority: 10.12.2001 US 6828
(71) Applicant: Reynolds Consumer Products, Inc., Richmond, Virginia 23230-1701 (US)
(72) Inventor: Tomic, Mladomir, Appleton, WI 54912-2399 (US)
(74) Representative: Ebner von Eschenbach, Jennifer

(57) **Abstract**

A method for making a resealable bag including extruding a package body having first and second sides (42,44) that face in opposite directions; extruding a pair of closure profiles (28,30) adapted to be interconnected with one another; and extruding a pair of slider retaining shoulders (56) adapted for retaining a slider on the package. The method also includes forming a precursor package structure by connecting the closure profiles and the retaining shoulders to the package body while the package body, the retaining shoulders and the closure profiles are in a molten state. As so connected, the closure profiles are positioned to project outward from the first side of the package body, and the retaining shoulders are positioned to project outward from the second side of the package body. After the closure profiles and the retaining shoulders have been connected to the package body to form the precursor package structure, the precursor package structure is cooled to solidify the closure profiles the retaining shoulders, and the package body. In certain embodiments, the package body, the closure profiles and the retaining shoulders can be simultaneously extruded from the same extrusion die.

## Description

The present invention relates generally to methods for manufacturing polymeric packages, such as, plastic bags. More particularly, the present invention relates to methods for manufacturing slider resealable packages.

Many packaging applications use resealable packages (e.g., bags, pouches, containers, etc.) to store or enclose various types of articles and materials. These packages may be used to store food products, non-food consumer goods, medical supplies, waste materials, and many other articles. Resealable packages are convenient in that they can be closed and resealed after the initial opening to preserve and/or prevent spillage of the enclosed contents. In some instances, providing products in resealable packages appreciably enhances the marketability of those products.

A conventional resealable package includes a closure mechanism having mating closure profiles. For some types of packages, a slider device is used to open and close the closure profiles. A typical slider device includes a plow positioned between the closure profiles, and tapered sidewalls located outside the closure profiles. To close the package, the slider device is moved in a first direction along the closure profiles such that the sidewalls press the closure profiles together causing the profiles to interlock. To open the package, the slider device is moved in a second direction along the closure profiles such that the plow separates the closure profiles thereby opening the package.

Resealable packages are manufactured by a variety of methods such as blown extrusion techniques or cast extrusion techniques. Improvements in the ease of manufacture of reclosable packages are desirable.

### Summary of the Invention

One aspect of the present invention relates to a method for making a reclosable package. The method includes extruding a package body having first and second sides that face in opposite directions; extruding a pair of closure profiles adapted to be interconnected with one another; and extruding a pair of slider retaining shoulders. The method also includes forming a precursor package structure by connecting the closure profiles and the retaining shoulders to the package body while the package body, the retaining shoulders and the closure profiles are in a molten state. As so connected, the closure profiles are positioned to project outward from the first side of the package body, and the retaining shoulders are positioned to project outward from the second side of the package body. After the closure profiles and the retaining shoulders have been connected to the package body to form the precursor package structure, the precursor package structure is cooled to solidify the closure profiles, the retaining shoulders, and the package body. In certain embodiments, the package body, the closure profiles and the retaining shoulders can be simultaneously extruded from the same extrusion die.

A variety of advantages of the invention will be set forth in part in the description that follows, and in part will be apparent from the description, or may be learned by practicing the invention. It is to be understood that both the foregoing general description and the following detailed description are explanatory only and are not restrictive of the invention as claimed.

The accompanying drawings, which are incorporated in and constitute a part of this specification, illustrate several aspects of the invention and together with the description, serve to explain the principles of the invention. A brief description of the drawings is as follows:
FIG. 1 is an elevational view of a reclosable package constructed in accordance with the principles of the present invention;
FIG. 2 is a cross-sectional view taken along section line 2-2 of FIG 1;
FIG. 3 is a schematic depiction of a system for manufacturing reclosable packages in accordance with the principles of the present invention;
FIG. 4A is a cross-sectional view taken along section line 4A-4A of FIG. 3 showing a discharge opening of a extrusion die;
FIG. 4B is a cross-sectional view taken along section line 4B-4B of FIG. 3 showing a precursor package structure extruded from the extrusion die of FIG. 4A;
FIG. 5 illustrates a multiple lane extrusion die suitable for use with the system of FIG. 3;
FIG. 6 illustrates another multiple lane extrusion die suitable for use with the system of FIG. 3;
FIG. 7A illustrates another extrusion die suitable for use with the system of FIG. 3, the extrusion die is adapted for extruding precursor package structures having peel seal sections;
FIG. 7B illustrates a profile of a precursor package structure extruded from the extrusion die of FIG. 7B;
FIG. 8 is a cross-sectional view taken along section line 8-8 of FIG. 3 showing a roller suitable for use in the system of Fig. 3;
FIG. 9 is a cross-sectional view of another roller suitable for use with the system of FIG. 3;
FIG. 10 is a cross-sectional view of a further roller suitable for use with the system of FIG. 3;
FIG. 11 is a cross-sectional view of still another roller suitable for use with the system of FIG. 3;
FIG. 12A illustrates an extrusion die suitable for use with the system of FIG. 3;
FIG. 12B is a cross-sectional view of a roller supporting a precursor package structure extruded from the extrusion die of FIG. 12A;
FIG. 13 schematically shows another system for manufacturing reclosable packages in accordance with the principles of the present invention;
FIG. 14 illustrates an additional system in accordance with the principles of the present invention for manufacturing reclosable packages;
FIG. 14A is a cross-sectional view taken along section line 14A-14A of FIG 14; and
FIG. 14B is a cross-sectional view taken along section line 14B-14B of FIG 14.

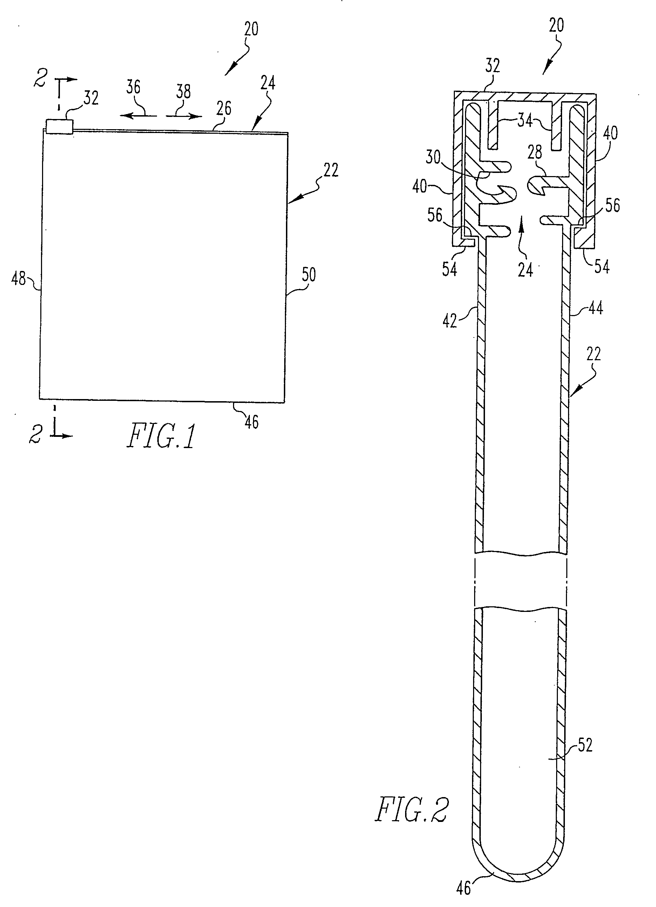

FIGS. 1 and 2 show a flexible package 20 (e.g., a polymeric package such as a plastic bag, pouch or other enclosure) constructed in accordance with the principles of the present invention. The flexible package includes a package body 22 that can be opened and closed by a resealable closure mechanism 24. The resealable closure mechanism 24 is located at a mouth 26 of the package body 22 and includes opposing male and female closure profiles 28 and 30 (see Fig. 2). The closure profiles 28 and 30 are selectively interlocked and separated by a slider 32 mounted at the mouth 26 of the package body 22. The slider 32 includes a plow 34 for separating the closure profiles 28 and 30 when the slider 32 is moved in a first direction (indicated by arrow 36 shown in Fig. 1) along the mouth 26 of the package body 22. The slider 32 also includes sidewalls 40 that preferably include ramped portions (not shown) for pressing the closure profiles 28 and 30 together to seal the closure mechanism 24. For example, movement of the slider 32 in a second direction (indicated by arrow 38 shown in Fig. 1) causes the ramped portions of the sidewalls 40 to press the profiles 28 and 30 together in a zipper-like fashion to seal the closure mechanism 24.

The package body 22 of the flexible package 20 includes first and second opposing panel sections 42 and 44 typically made from a flexible, polymeric, plastic film. In certain embodiments, the panel sections 42 and 44 can meet at a fold line 46 positioned at an opposite end of the flexible package 20 from the mouth 26. Side edges 48 and 50 of the package body 22 are preferably sealed by conventional techniques such as heat sealing. Thus, the fold line 46 and the side edges 48 and 50 cooperate to define a 3-edged containment section for holding a product within an interior 52 of the package body 22.

The slider 32 of the flexible package 20 is retained on the package body 22 by shoulders 54 that project inwardly from the sidewalls 40. The term "retained" will be understood to mean that the shoulders 54 assist in preventing the slider 32 from being removed from or pulled off of the package body 22. The shoulders 54 oppose or abut against shoulders 56 that project outwardly from the panel sections 42 and 44. Interference (i.e., engagement or contact) between the shoulders 54 and the shoulders 56 prevents the slider 32 from being pulled upwardly off the package body 22. As is known in the art, the slider 32 can also include end stops that engage the side edges 48 and 50 of the package body 22 to prevent the slider 32 from being slid past the side edges 48 and 50 and off the package body 22. In a preferred embodiment, the slider 32 is mounted on the package body 22 by flexing the sidewalls 40 outward (i.e., apart from one another) and snapping the shoulders 56 past the shoulders 54.

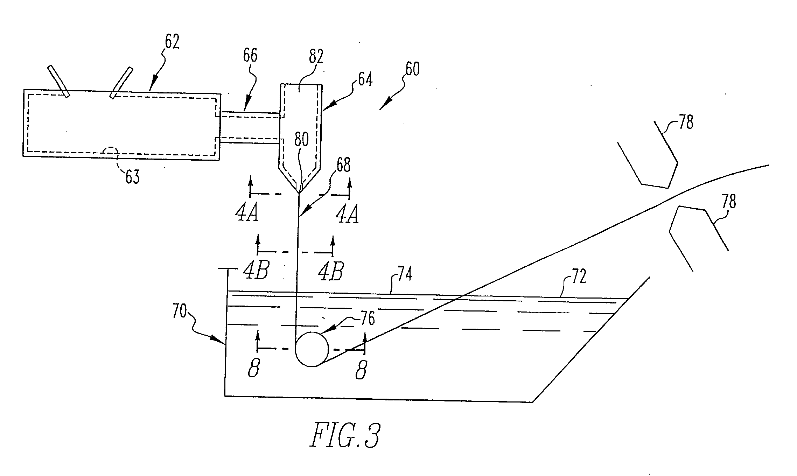

FIG. 3 schematically shows a system 60 for use in manufacturing flexible packages by a method in accordance with the principles of the present invention. Generally, the system includes an extruder 62 for receiving and melting a polymeric material (e.g., plastic) into a molten state. The term "molten" will be understood to mean having fluid-like properties. An extrusion die 64 (e.g., a cast film type extrusion die) is located downstream from the extruder 62. Molten polymeric material from the extruder 62 is conveyed to the extrusion die 64 through a die adapter 66 (e.g., a tube, pipe or other conduit). In use, molten polymeric material from the extruder 62 is advanced through the extrusion die 64 such that an extrusion in the form of a molten web 68 is provided.

From the extrusion die 64, the molten web 68 is conveyed downwardly or drawn to a cooling bath 70 containing a cooling fluid 72 (e.g., water) for cooling the molten web 68 such that the web 68 solidifies. To limit deformation/distortion of the web profile, the web 68 is preferably vertically extruded and preferably enters the cooling fluid 72 generally at a right angle relative to a top surface 74 of the cooling fluid 72.

Still referring to FIG. 3, at the cooling bath 70, the web 68 extends around an idler roller 76 located within the cooling fluid 72. Within the cooling bath 70, the web 68 cools and solidifies. Upon exiting the cooling bath 70, moisture from upper and lower surfaces of the solidified web 68 is removed by moisture strippers 78. During subsequent processing steps, the web 68 can be folded to form a fold line corresponding to the fold line 46 shown in FIG. 2. Next, portions of the web can be heat sealed together to form edges corresponding to side edges 48 and 50, and a slider can be mounted at the top of the folded web. Thereafter, the web can be cut at the edges to form discreet bags.

It will be appreciated that the extruder 62 can have any number of known configurations. In one non-limiting embodiment, the extruder 62 can include a chamber 63 for holding plastic material, a heating element for heating the plastic within the chamber into a molten state, and a drive/pumping mechanism (e.g., a screw) for melting/advancing the material to and through the extrusion die 64.

The extrusion die 64 preferably includes an inner plenum 82 that provides fluid communication between the die adapter 66 and a discharge opening 80. In use of the system, molten material from the extruder 62 is forced through the adapter 66 to the plenum 82 of the extrusion die 64. From the plenum 82, the molten material is advanced through the discharge opening 80 to form the web 68.

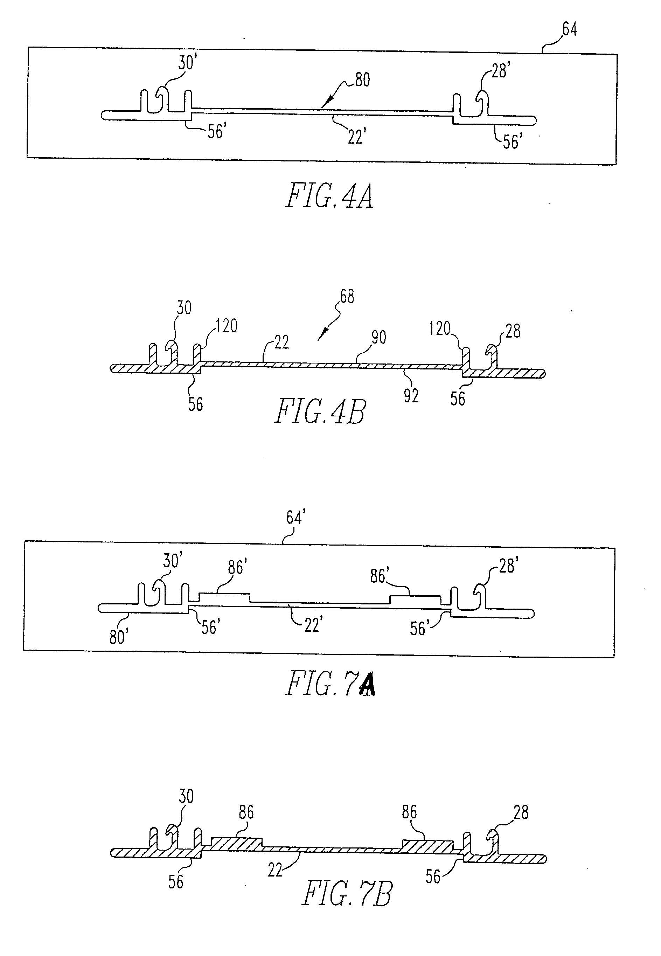

FIG. 4A illustrates a representative shape of the discharge opening 80. As shown in FIG. 4A, the opening 80 includes a centrally located package body forming portion 22'. The opening 80 also includes a male closure profile forming portion 28', a female closure profile forming portion 30', and retaining shoulder forming portions 56'. FIG. 4B is a cross-sectional view of the molten web 68 as the web exits the extrusion die 64. It will immediately be appreciated that the web 68 exiting the die 64 has the same or comparable cross-sectional configuration as the flexible package 20 shown in FIG. 2. For example, the web 68 includes the package body 22, the male and female closure profiles 28 and 30, and the slider retaining shoulders 56. Manufacturing efficiency is enhanced by forming each of the above-identified structures during a single extrusion process. The web 68 thus forms a precursor flexible package that needs only to be folded to form fold line 46, sealed to form side edges 48 and 50, and cut at the side edges to form discrete flexible packages 20.

It is conventionally known to cast extrude the package body (i.e, the side panels) of a plastic bag. However, in the prior art, the closure profiles are not coextruded with the package body. Instead, only the package body is extruded and the closure profiles are attached later. During extrusion of the package body, it is common for the edges of the extruded package body to thicken. Typically, the thickened regions are trimmed and fed back into the extruder. In the above-described embodiment, the closure profiles 28 and 30 are extruded at the outer edges of the package body 22. Thickening is not problematic in this particular embodiment since the profiles 28 and 30 are intended to be substantially thicker than the package body 22. Thus, the need for trimming can be reduced or eliminated.

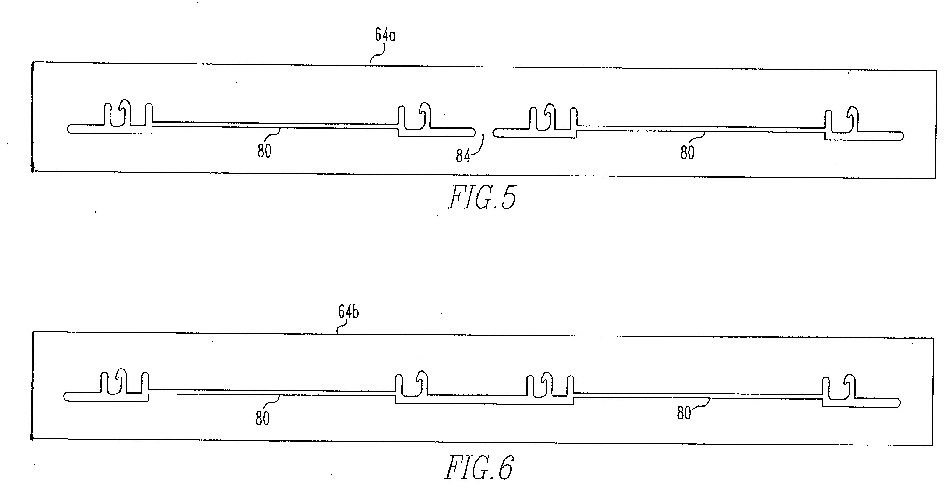

FIG. 5 illustrates an alternative extrusion die 64a adapted for concurrently extruding multiple webs for use in a multiple lane manufacturing process. The term "concurrently extrude" will be understood to mean that the webs are extruded simultaneously or at about the same time. As shown in FIG. 5, the extrusion die 64a includes two separate discharge openings 80 having the same configuration as the discharge opening 80 described with respect to FIG. 4A. While two of the openings 80 have been shown, it will be appreciated that more can also be used to provide additional manufacturing lanes. Because the two openings 80 are separated by a space 84, the webs extruded through the openings 80 are separate from one another thereby eliminating the need to use slitting operations to later separate the webs.

FIG. 6 illustrates another extrusion die 64b suitable for use in the system 60 of FIG. 3. The extrusion die 64b includes two discharge openings 80 that are not separated from one another. In other words, the openings 80 cooperate to define one elongated opening. Thus, a single elongated web is extruded from the extrusion die 64b. After cooling of the web, the web is preferably separated into two pieces by conventional slitting techniques. Extrusion dies providing elongated webs having greater widths may be separated into three or four pieces, for example. During slitting operations, alignment of the web is important to ensure that the web is cut at the proper location. In this regard, the pre-formed shoulders 56 of the webs can cooperate with grooves or shoulders provided on the slitting equipment to facilitate maintaining accurate alignment of the web.

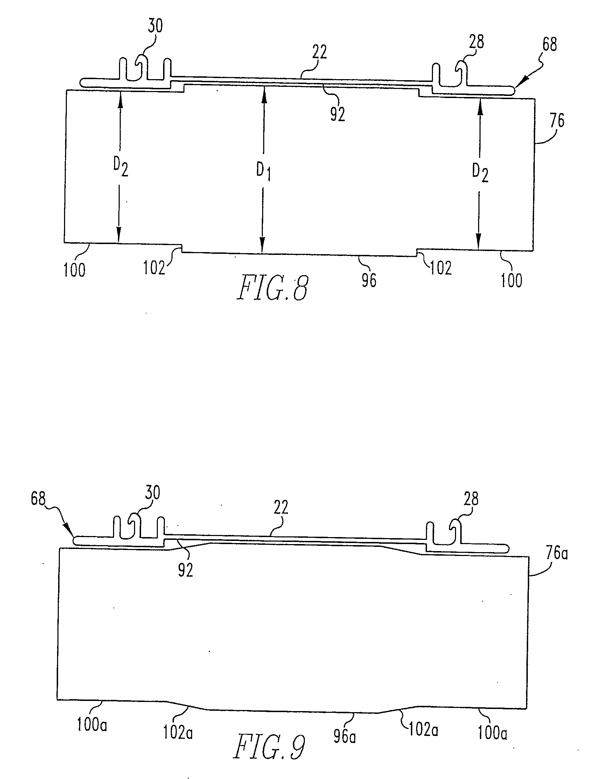

FIG. 7A illustrates still another extrusion die 64c suitable for use in the system 60 of FIG. 3. The extrusion die 64c has a discharge opening 80'. The opening 80' has the same configuration as the opening 80 described with respect to the embodiment of FIG. 4A, with the addition of peel seal forming regions 86'. The peel seal forming regions 86' allow peel seal sections 86 to be concurrently extruded with the package body 22, the closure profiles 28 and 30, and the retaining shoulders 56 (see FIG. 7B). Of course, it will be appreciated that it is desirable for the peel seal sections 86 to be made from a different material than the remainder of the flexible package 20. To accommodate this, the extrusion die 64 can be divided into multiple plenums. For example, in one embodiment, a first plenum is used to convey molten material from the extruder 62 to the package body forming portion 22', the profile forming portions 28' and 30', and the retaining shoulder portions 56'. Concurrently, a second plenum is used to convey molten material from a second extruder to the peel seal forming sections 86'.

In addition to forming peel seal sections, multiple extruders and plenums could also be used to extrude the package body 22 with multiple layers of different film material. For example, layers of different material could be used to provide oxygen or moisture barrier protection for food products, to provide specific bag characteristics such as bag body film toughness, sealing criteria, and surface differences, or a combination of these. In addition, by using different plenums that receive molten material from different extruders, the closure profiles 28 and 30, the retaining shoulders 56 and the package body 22 can all be concurrently extruded from different materials.

While the embodiment of FIG. 7A allows peel seal sections 86 to be concurrently extruded with the package body 22, it will be appreciated that in alternative embodiments peel seal sections could be post-coated on the package body 22 immediately after extrusion of the package body 22, or as a subsequent step after the package body has been cooled and solidified. If colored bags are desired, either the package body or the closure profiles 28 and 30 could be pigmented different colors. If the bag body is pigmented, the outer surface of the bag could be printed, or a label applied to it to provide information to consumers. If the closure members are pigmented, this could be used as an indication to consumers that the slide has opened or closed the bag. Further, peel seals can also be used to provide evidence of tampering or hermiticity.

Referring again to FIG. 4B, the package body 22 has first and second sides 90 and 92 that face in opposite directions. The male and female profiles 28 and 30 project outwardly from the first side 90 of the package body 22 (i.e., the closure profiles 28 and 30 project outward beyond a plane or boundary defined by the first surface 90). Similarly, the slider retaining shoulders 56 project outward from the second side 92 of the package body 22 (i.e., the retaining shoulders 56 project outward or extend beyond a plane or boundary defined by the second surface 92). Because projections jut outwardly from both sides of the package 22, there is the possibility that at least portions of the projections or other parts of the web will be deformed upon contact with the idler roller 76.

To reduce the likelihood of deformation, the roller 76 preferably includes structure for accommodating the projections. For example, as shown in FIG. 8, the roller 76 has an increased diameter portion 96 located at a mid-region of the roller 76, and reduced diameter portions 100 located near the ends of the roller 76. It is to understood that rollers which accommodate multiple webs for use in multiple lane manufacturing processes have increased diameter portions located at mid-regions of each lane of the roller and reduced diameter portions located near the ends of each lane.

The increased diameter portion 96 is shown including a diameter D, that is larger than a diameter D₂ of the reduced diameter portions 100. Shoulders 102 separate the reduced diameter portions 100 from the increased diameter portion 96. The shoulders 102 are preferably about the same height as the shoulders 56 of the web 68. Additionally, the increased diameter portion 96 preferably has a length that is generally equal to or slightly less than the length of the body portion 22 of the web 68. Thus, as the web 68 moves around the roller 76, the increased diameter portion 96 provides support for the package body 22, and the reduced diameter portions 100 provide support for the back sides of the closure profiles 28 and 30. Thus, the web 68 is generally uniformly supported along its length thereby reducing the likelihood of deformation.

Figure 9 illustrates an alternative roller 76a suitable for use with the system 60 of FIG. 3. Similar to the embodiment of FIG. 8, the roller 76a includes reduced diameter end portions 100a for supporting the back sides of the closure profiles 28 and 30, and an increased diameter midportion 96a for supporting the package body portion 22. The reduced diameter portions 100a are connected to the increased diameter portion 96a by tapered regions 102a that provide gradual diameter transitions between the reduced diameter portions 100a and the increased diameter portion 96a.

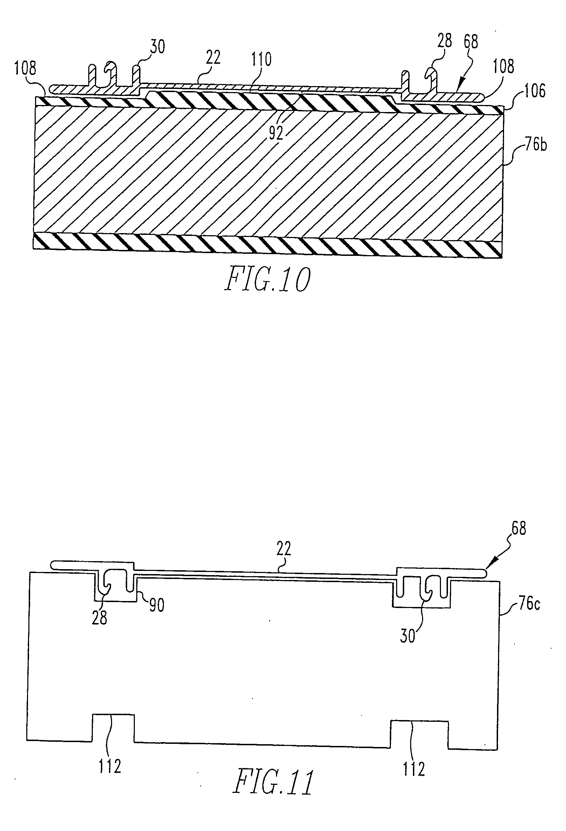

FIG. 10 illustrates another roller 76b suitable for use with the system of FIG. 3. The roller 76b includes an outer cushioning layer 106 made of an elastomeric material such as rubber or foam. When the web 68 is conveyed about the roller 76b, portions 108 of the cushioning layer 106 engaging the closure profiles 28 and 30 are compressed inwardly thereby allowing a central portion 110 of the cushioning layer 106 to contact and support the body portion 22 of the web 68.

In the previous embodiments, the depicted rollers 76, 76a and 76b were shown engaging the second side 92 of the web 68. FIG. 11 shows a roller 76c adapted for contacting the first side 90 of the web 68. The roller 76c includes a pair of spaced apart, circumferential grooves 112 sized for receiving the closure profiles 28 and 30 of the web 68. Thus, the closure profiles 28 and 30 are prevented from being compressed against the surface of the roller 76c, and the remainder of the web 68 is uniformly supported by the roller 76c. It will be appreciated that the grooves 112 define reduced diameter portions of the roller 76c.

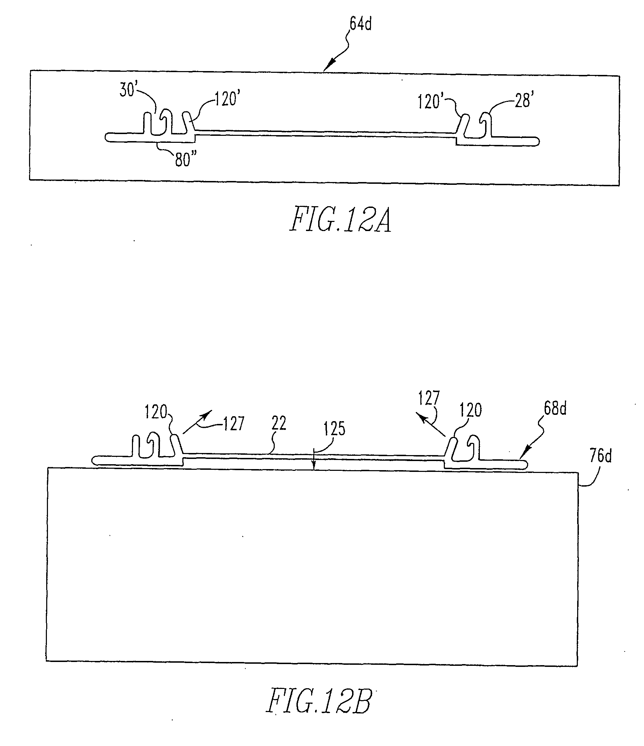

FIG. 12A shows another extrusion die 64d adapted for use with the system 60 of FIG. 3. The extrusion die 64d includes an opening 80" that is the same as the opening 80 of FIG. 5, except that projection forming portions 120' located adjacent the closure profile portions 28' and 30' are angled outward a predetermined amount. FIG. 12B shows a web 68d extruded from the extrusion die 64d of FIG. 12A. The web 68d is shown being conveyed about standard cylindrical roller 76d. As the web 68d is conveyed about the roller 76d, the body portion 22 is unsupported and tension on the body portion 22 causes the body portion 22 to flex inward toward the roller as indicated by arrow 125. Concurrently, the tension on the package body portion 22 causes projections 120 to deform inwardly as indicated by arrows 127. Preferably, the projections 120 deform inward a predetermined amount such that upon disengaging from the roller 76d, the projections 120 are oriented generally at right angles with respect to the package body 22 (see FIG. 4B). Thus, the projection forming portions 120' are set at predetermined angles relative to the package body forming body portion 22 to pre-compensate for the predetermined amount of deformation that will occur as the web 68d is conveyed about the roller 76d.

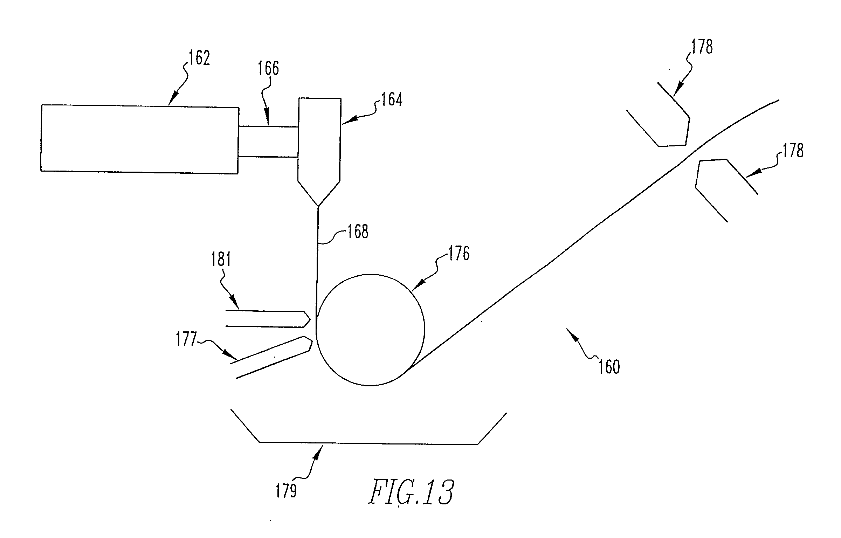

FIG. 13 shows another system 160 for practicing a method in accordance with the principles of the present invention. Similar to the embodiment of FIG. 3, the system 160 includes an extruder 162, an adapter 166, an extrusion die 164, and moisture strippers 178 for removing moisture from a web 168 extruded from the extrusion die 164. In one embodiment, the extrusion die 164 is configured similar to the extrusion die 64b disclosed in FIG. 6. The web 168 extruded from the die 164 is cooled by a chill roller 176 (e.g., a roller cooled by an internal cooling fluid circulated therein or another type of cooling technique). To accommodate projections provided on the web 168, the chill roller 176 can have regions of different diameters or grooves similar to the embodiments previously described herein. As the closure profiles of the web 168 are typically thicker than the package body of the web, the closure profile regions will cool at a slower rate than the package body. To achieve a uniform cooling rate, sprayers 177 can be provided for applying a cooling fluid (e.g., water) against the portions of the closure profiles that face away from the chill roller 176. A cooling fluid collection tank 179 can be provided for collecting cooling fluid applied to the web 168. Additionally, an air knife 181 can be used at both edges of the total width of the web to pin down the web edges against the chill roll surface to assist in uniform cooling of the web.

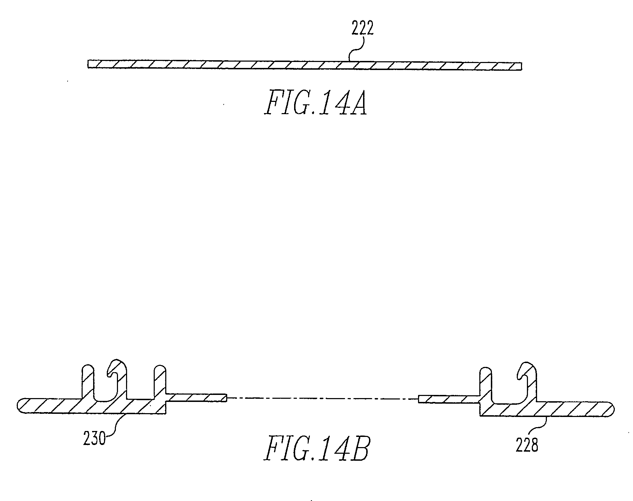

FIG. 14 depicts another system 260 for practicing a manufacturing method in accordance with the principles of the present invention. The system includes a first extruder 262a and a first extrusion die 264a for extruding a package body 222 as shown in FIG. 14A. The system 260 also includes a second extruder 262b and a second extrusion die 264b for extruding profile strips 228 and 230 as shown in FIG. 14B. The package body 222 and the profile strips 228 and 230 are brought together and connected (e.g., by laminating, fusing, bonding or otherwise interconnecting the elements together) adjacent a chill/laminating roller 276 prior to cooling. As the web leaves the roller 276, it will be appreciated that the web has the same or comparable cross-sectional configuration as the web 68 of FIG. 4B.

With regard to the foregoing description, it is to be understood that

## Claims

1. A method for making a recloseable package having a package body including first and second sides that face in opposite directions, a pair of closure profiles adapted to be interconnected with one another and positioned to project outwardly from the first side of the package body, and a pair of retaining shoulders positioned to project outwardly from the second side of the package body, the method comprising:
concurrently extruding the package body, the pair of closure profiles, and the pair of retaining shoulders from a single extrusion die to form a package structure.

2. The method of claim 1, further comprising cooling the package structure by submersion in a cooling bath.

3. The method of claim 2, wherein the package structure enters the cooling bath generally at a right angle relative to a top surface of the cooling bath.

4. The method of claim 1, further comprising cooling the package structure by spraying a coolant on the package structure.

5. The method of claim 1, further comprising cooling the package structure by contact with a chill roller.

6. The method of claim 5, including further cooling of the closure profiles by applying a cooling fluid to the closure profiles.

7. The method of claim 6, wherein applying the cooling fluid includes spraying the cooling fluid on the closure profiles.

8. The method of claim 1, further comprising conveying the package structure about a roller, wherein the first side of the package body faces the roller as the package structure is conveyed about the roller, and wherein the roller includes reduced diameter portions that correspond to the closure profiles and an increased diameter portion that corresponds to the package body.

9. The method of claim 8, wherein the reduced diameter portions comprise grooves.

10. The method of claim 1, further comprising conveying the package structure about a roller, wherein the second side of the package body faces the roller as the package structure is conveyed about the roller, and wherein the roller includes an increased diameter portion that corresponds to the package body.

11. The method of claim 10, wherein the roller includes reduced diameter portions. corresponding to the pair of retaining shoulders of the package structure.

12. The method of claim 1, further comprising conveying the package structure about a roller, wherein the roller includes a resilient outer surface having sufficient resiliency to prevent the closure profiles from deforming as the package structure is conveyed about the roller.

13. The method of claim 1, wherein the package structure is vertically extruded.

14. The method of claim 1, further comprising forming the closure profiles at opposite edges of the package structure.

15. The method of claim 1, further comprising casting a peel seal and incorporating the peel seal into the package structure prior to cooling.

16. A method for making a recloseable package, comprising:
extruding a package body having first and second sides that face in opposite directions;
extruding a pair of closure profiles adapted to be interconnected with one another;
extruding a pair of slider retaining shoulders adapted for retaining a slider on the recloseable package;
forming a precursor package structure by connecting the closure profiles and the retaining shoulders to the package body while the closure profiles, the retaining shoulders, and the package body are in a molten state, the closure profiles of the precursor package structure being positioned to project outward from the first side of the package body, and the retaining shoulders of the precursor package structure being positioned to project outwardly from the second side of the package body;
cooling the molten precursor package structure to solidify the closure profiles, the retaining shoulders, and the package body.

17. The method of claim 16, wherein the package body, the closure profiles, and the retaining shoulders are simultaneously extruded from a single extrusion die.

18. The method of claim 16, wherein the package body is extruded at a first extrusion die, and at least one pair of the pairs of retaining shoulders and closure profiles is extruded from a second separate extrusion die.

19. The method of claim 16, wherein the precursor package structure is cooled by a chill roller.

20. The method of claim 19, wherein the closure profiles are further cooled by a cooling fluid applied to the closure profiles.

21. The method of claim 20, wherein the cooling fluid is applied by a sprayer.

22. The method of claim 16, wherein the package structure is cooled in a cooling bath.

23. The method of claim 16, wherein the package structure is cooled by a coolant sprayed on the package structure.

24. The method of claim 16, further comprising conveying the precursor package structure about a roller, wherein the first side of the package body faces the roller as the package structure is conveyed about the roller, and wherein the roller includes reduced diameter portions that correspond to the closure profiles and an increased diameter portion that corresponds to the package body.

25. The method of claim 24, wherein the reduced diameter portions comprise grooves

26. The method of claim 16, further comprising conveying the precursor package structure about a roller, wherein the second side of the package body faces the roller as the package structure is conveyed about the roller, and wherein the roller includes an increased diameter portion that corresponds to the package body.

27. The method of claim 26, wherein the roller includes reduced diameter portions corresponding to the pair of retaining shoulders of the package structure.

28. The method of claim 16, further comprising conveying the precursor package structure about a roller, wherein the roller includes a resilient outer surface having sufficient resiliency to prevent the closure profiles from deforming as the package structure is conveyed about the roller.

29. The method of claim 16, wherein the precursor package structure is cooled at a water bath, and the package structure enters the water bath generally at a right angle relative to a top surface of the water bath.

30. The method of claim 16, wherein the precursor package structure comprises a web with the closure profiles located at opposite edges of the web.

31. The method of claim 16, further comprising casting a peel seal, and incorporating the peel seal into the precursor package structure prior to cooling.
